# EUROPEAN PATENT SPECIFICATION

(11) **EP 0 342 261 B1**
(45) Date of publication and mention of the grant of the patent: **29.03.1995**
(21) Application number: 88108138.4
(22) Date of filing: 20.05.1988
(51) Int. Cl.: G06F 11/00

(54) **Arrangement for error recovery in a self-guarding data processing system**
Einrichtung für die Fehlerkorrektur in einem selbstbewachten Datenverarbeitungssystem
Dispositif de reprise d'erreur dans un système de traitement de données auto-surveillé

(43) Date of publication of application: 23.11.1989
(73) Proprietor: International Business Machines Corporation, Armonk, N.Y. 10504 (US)
(72) Inventor: Rudolph, Peter, D-7036 Schönaich (DE); Bock, Dietrich W., Dipl.-Ing., D-7036 Schönaich (DE); Schulze-Schölling, Hermann, Ing. (grad.), D-7034 Gärtringen (DE); Grassmann, Kurt, Dipl.-Ing., D-7031 Jettingen (DE)
(74) Representative: Jost, Ottokarl, Dipl.-Ing.

(56) References cited:
- EP-A- 0 078 887
- DE-A- 3 335 549
- DE-B- 2 737 133
- US-A- 4 679 195
- PATENT ABSTRACTS OF JAPAN VOLUME 7, NO. 130 (P-202) (1275) 7TH JUNE 1983; & JP-A-58048101 (KOMATSU SEISAKUSHO K.K.) 22-03-1983
- PATENT ABSTRACTS OF JAPAN VOLUME 6, NO. 245 (P-159) (1123) 3RD DECEMBER 1982; & JP-A-57143648 (HITACHI SEISAKUSHO K.K.) 04-09-1982

## Description

The invention relates to an arrangement in a self-guarding data processing system which supports error recovery and error handling by control program routines within the suspectedly faulty processor including means for failure detection (checker), system reset, and restart.

In current data processing systems with dedicated service processors, the system/processor stati are continuously monitored by the service processor so that the service processor can start support functions to handle error and other abnormal situations in the rest of the system after detection. Service processors are implemented in such a way that any error situation in the rest of the system does not impact their operations; thus service processors can process and support error situations in other defective areas.

In order to keep data and function distortions and deteriorations in case of hardware faults within the smallest possible limits, checkers are provided which block further processing by stopping the functional clocks so that no uncontrolled data changes can be made. This works for solid and intermittent hardware faults.

In U.S. Patent 4,679,195 an error tracking apparatus for a data processing system having a plurality of data locations is disclosed. At each data location at which an error is to be detected, an error detection means is provided for generating an error signal upon the detection of an error. Associated to each error detection means is a counter for counting system cycles and storing a system cycle count. By interrogation of the system cycle counts stored in each of the counters, an error history can be determined for the data processing system.

In computer systems having a service processor, the service processor continuously monitors the computer system. If the monitoring service processor detects a clock stop status, it reads out all detailed error information locked in latches and arrays of the stopped unit without being affected by those error situations. The service processor accesses the error data via a service/support interface at the failing unit. Further error handling, reset, restart, and recovery actions on the defective unit are performed under control of the independent service processor.

The check latches that store the status of their associated fault detection circuits are integrated so that an active check latch directly controls the run control of the processor and thus stops the function clocks. Prior to restarting the processor all check latches must be reset. In this way the check latches are used in a twofold manner:
1. they hold the information on which a failure had occurred (i.e. which error detection mechanism had been activated),
2. they control the processor clock stop mechanism.

In self-guarding processors (service processor-less, SP-less) error handling activities have to be implemented without any support from a dedicated service facility which is independent of and secured against the error situation which it handles. The self-guarding processor, however, must be stopped (to allow intermittent faults to settle) for a certain period of time, the failure environment has to be cleared (reset), and restarted to execute an error handling program routine by and in itself. For a successful error analysis and fault localization for repair, and for error recovery/ system restart, the processor/system status at time of failure and the checker information must survive the reset and restart activities of the self-guarding processor.

It is therefore an object of the invention to present a solution for an effective error recovery, analysis and/or localization within self-guarding processors.

Accordingly, a circuit arrangement in a self-guarding data processing system for error recovery by error handling program routines, with error checking means, and indicator means associated to said checking means, and system reset and restart means, is claimed in claim 1.

The above described features result in the advantage of an effective handling of error situations in self-guarding data processing systems.

A complete understanding of the present invention may be obtained by reference to the accompanying drawings in which:
- Fig. 1: is a schematic block diagram showing the general structure of a data processing system which forms the environment of the invention;
- Fig. 2: is a block diagram showing the circuitry necessary for saving checker stati to survive the system reset operations; and to control stopping of the functional clocks;
- Fig. 3: is a pulse diagram of signals controlling error handling operations.

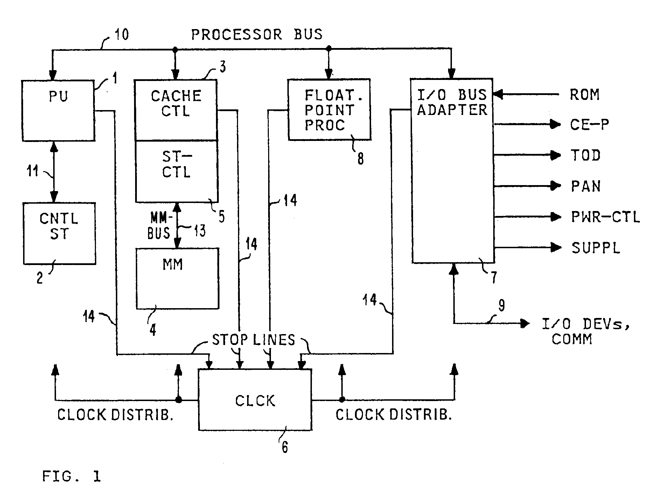

Referring now to Fig. 1, there is shown a block diagram of a conventional data processing system having various complex components which are interconnected by busses. As the Fig. shows, there is no dedicated service processor which can support a processing unit (PU) 1 for handling error situations. A processor bus 10 connects the central control component, the processing unit 1, to a main memory (MM) 4 via a cache/main storage controller (Cache CTL/ST-CTL) 3/5 and a main memory bus (MM- bus) 13. A further path exists which connects the processor bus to an optional floating point processor 8 and at least to one I/O bus adapter 7. The I/O bus adapter connects the processor bus 10 via an input/output bus (I/O bus) 9 to various input/output devices (I/O DEV), and to further components such as communication adapters (COMM) etc.. The I/O bus adapter is further designed to connect various control and monitor components to the system, such as a customer engineering panel CE-P, a battery operated time of day clock TOD, a read only memory unit ROM, an operator panel PAN, a power controller PWR-CTL or supplemental devices SUPPL. A control store (CNTL-ST) 2 containing the control program is connected to the PU via a control store bus 11.

The system clock control, clock generation, and distribution is centralized on a clock chip (CLCK) 6 which has multi- wire connections 14 to almost all of the system components. Beside the clock lines, the logic chips are connected to the clock chip 6 by means of individual stop lines (one per chip).

For a successful error handling an extensive check coverage of data and control logic with integrated checking of the checking circuits (checkers) is provided. To guaranty an optimum of function security, the checkers are always active even when executing critical start/restart functions, such as hardware reset, initialization, and machine check handling.

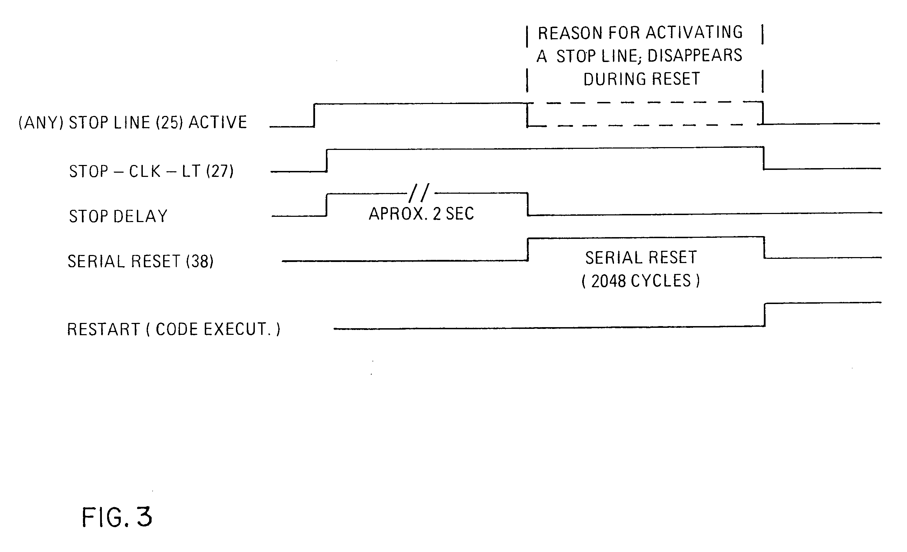

To overcome faults of intermittent nature the reset and restart operations after any machine check are delayed (see Fig. 3).

As mentioned above, the error detection facilities (e.g. checkers) are always active (always hot checkers) to secure the processor functions dealing with problem situations of their own. Therefore, a check overwrite facility for the code level is not allowed. Switching on a check overwrite facility for a processor area, that had already signalled a fault existence by error stop, very probably causes the entering of a sequence of abnormal functions enforced by executing a queue of indefinite instructions. The integrity of vital system and user data is exposed.

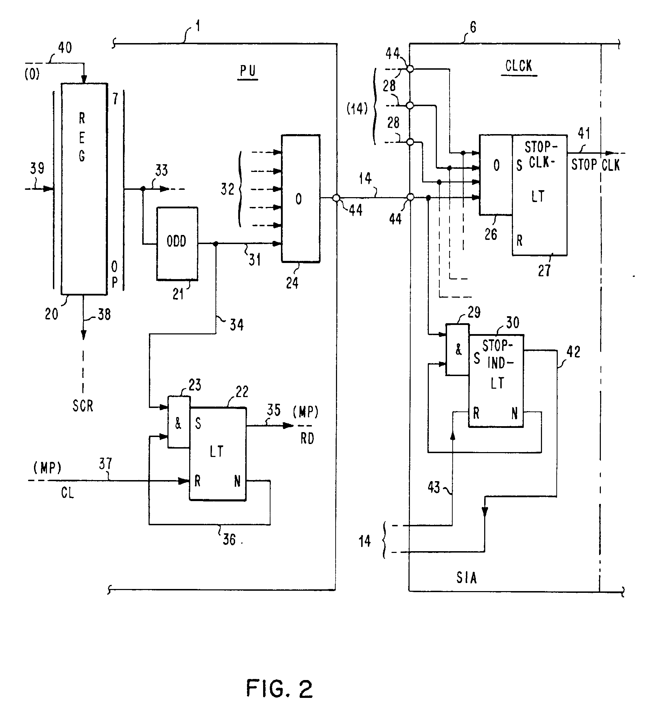

Fig. 2 shows an example in which processor chip 1 and clock chip 6 communicate error and clock control information. Many system components, such as register 20 are provided with parity check circuits 21 which test the output information of the associated components on odd parity. Register 20 can be reset by a serial check reset SCR during which a sequence of binary zeros is shifted sequentially through the stages of register 20. The reset is required after a machine check stop to put the circuits on the chip in a well defined error-free status for a restart. In Fig. 2, register 20 is shown as a data flow register with a data flow input 39 and a data flow output 33. However, there are many components on the processor chip 1, such as the output register of an arithmetic and logic unit (not shown) which need parity checkers. The error signals of all check circuits within a chip, which are transmitted on lines 31 and 32 to an OR gate 24 are ORed together and activate the single chip error line (stop line) 25 which can be one wire of cable or land pattern 14. The stop line extends from a connecting point 44 on the processor chip 1 to a connecting point 44 on the clock chip 6. On the clock chip 6 again the stop lines 25, 28 are ORed together in an OR gate 26 which forms the input of a stop clock latch (stop-CLK-LT) 27 which generates the stop clock signal (stop CLK) on line 41 which is used to block the generation of functional clock pulses. A clock stop also stops processor 1.

A self-guarding processor must be reset and restarted to handle its error situation. This means that the error stati manifested in many check latches (and also other storing devices) have to survive the reset and restart activities and have to be accessible by program routines running within processor 1 after restart. Therefore, a check indicator latch 22 is associated with each check circuit 21 the status of which has to survive the system reset operation. In addition, a stop indicator latch 30 is provided for each stop line 25, 28 on the clock chip in the service interface area SIA. The indicator latches 22 and 30 cannot be reset by normal system reset operations for restart but only by an integrated service program written to handle error recovery, analysis and fault localization.

The active stop line 25, 28 sets its associated stop indicator latch 30 on the clock chip 6 to indicate which chip has activated its stop line. These latches can only be read and reset via the clock chip service interface area SIA. As the pulse diagram in Fig. 3 shows, further activities after a clock stop are delayed by a stop delay for an adequate period of time (e.g. about two seconds, technology-dependent) to allow intermittent physical causes of errors to collapse. The (error) stop delay can be controlled by a counter (not shown).

After the delay the clock control on the clock chip 6 activates the reset control for a check reset. In many cases of processor designs, the check reset is a hardware controlled function (serial reset) which clears (to non-error states) only those elements of the processor data flow which may contain erroneous data and which have to be set into an error free state prior to a restart of the program execution in the processor nucleus.

The serial check reset SCR, however, must not affect stored information (e.g. indicator latches) which is required for error analysis and error recovery of the operation system (machine check interrupt).

If a stop line 25 does not switch to inactive (signal level) during reset, the system enters a state which is called "Check Stop State". In this state an automatic restart is not allowed.

The check reset causes the instruction address register (not shown) to be loaded with an address that points to the beginning of an error handling program. Accordingly, a check indicator latch (not shown) on the processor chip 1 is set. This latch is also read and reset by instruction control.

After termination of the serial check reset which takes 2048 cycles in the example of Fig. 3, processor 1 is restarted by de-blocking the functional clocks, so that instruction processing is resumed, starting with the forced address which was previously loaded into the instruction address register.

By interrogating the check reset indicator latches the error handling program routine is guided and it proceeds with reading the error information of the check circuits out of the check indicator latches in which the error information is saved because the serial check reset only cleared the instruction nucleus of the processor 1. Other information may still reflect an error state when the error handling program routine tries to read this information. This will cause a renewed error (check) reaction in the processor. However, as the error handling program routine has not effected the indicator latches which were set by an error in resetting them by a check reset, the error handling program which was started immediately after the initial error is able to discover the reason for the renewed check restart.

For some control purposes the clock chip 6 is provided with a prevent stop delay latch (not shown) which can be set or reset by specific control instructions. In order to speed up the error handling procedure the prevent stop delay latch is set. It is reset by program when the error status collection procedure is completed. The collected error stati (error image) are stored in the main memory (extended machine check log-out area from which they are available to the operating system after being restarted via a machine check interrupt).

## Claims

1. Circuit arrangement in a self-guarding data processing system for error recovery by error handling routines, with error checking means (21) and indicator means (22) associated to said checking means, and system reset and restart means,
characterized in that there is provided a stop indicator latch (30) which is connected to a stop line (25) the signal on which is used to stop the functional clocks of the data processing system due to an error, said stop signal starting a delay after which those latches which have to be reset prior to a restart are reset without resetting said indicator means (22), and an error handling routine is started, using the error check information stored in said indicator means, said indicator means being reset by said error handling routine.

2. Circuit arrangement as set forth in claim 1, where in a modular data processing system there is provided for each module (chip 1, 2, 3, ..) a stop indicator latch (30) which is connected to a stop line (25, 28, 44), the output (42) of said stop indicator latches being connected to a clock chip service interface area (SIA) for reading and resetting the indicator means (22) and said stop indicator latches, and for providing a starting address of the error handling routine after said delay.

## Patentansprüche

1. Schaltungsanordnung in einem sich selbst schützenden Datenverarbeitungssystem zur Fehlerkorrektur durch Fehlerbehandlungsunterprogramme, mit Fehlerprüfmitteln (21) und Anzeigemitteln (22), die den Prüfmitteln zugeordnet sind, und Systemzurücksetz- und Wiederstartmitteln,
dadurch gekennzeichnet, daß ein Stoppanzeige-Zwischenspeicher (30) bereitgestellt wird, welcher mit der Stoppleitung (25) verbunden ist, wobei das Signal auf der Stoppleitung verwendet wird, um die Funktionstakte des Datenverarbeitungssystems auf Grund eines Fehlers anzuhalten, das Stoppsignal eine Verzögerung startet, nach der die Zwischenspeicher, welche vor einem Wiederstart zurückgesetzt werden müssen, zurückgesetzt werden, ohne daß die Anzeigemittel (22) zurückgesetzt werden, und ein Fehlerbehandlungsunterprogramm gestartet wird, das die Fehlerkontrollinformation, die in den Anzeigemitteln gespeichert ist, verwendet, wobei die Anzeigemittel dann durch das Fehlerbehandlungsunterprogramm zurückgesetzt werden.

2. Schaltungsanordnung nach Anspruch 1, dadurch gekennzeichnet, daß in einem modularen Datenverarbeitungssystem für jedes Modul (Chip 1, 2, 3, ...) ein Stoppanzeige-Zwischenspeicher (30) bereitgestellt wird, welcher mit einer Stoppleitung (25, 28, 44) verbunden ist, wobei der Ausgang (42) des Stoppanzeige-Zwischenspeichers mit einer Serviceschnittstelle (SIA) des Taktchips verbunden ist, um die Anzeigemittel (22) und die Stoppanzeige-Zwischenspeicher zu lesen und zurückzusetzen und um nach der Verzögerung eine Startadresse für das Fehlerbehandlungsunterprogramm bereitzustellen.

## Revendications

1. Disposition de circuit dans un système de traitement de données auto-surveillé pour la reprise d'erreur par des programmes de manipulation d'erreur, avec un moyen de vérification d'erreur (21) et un moyen d'indicateur (22) associé audit moyen de vérification et un moyen de remise à zéro et de redémarrage de système,
caractérisé en ce qu'il est prévu une bascule d'indicateur d'arrêt (30) qui est reliée à une ligne d'arrêt (25), dont le signal est utilisé afin d'arrêter les horloges fonctionnelles du système de traitement de données du fait d'une erreur, ledit signal d'arrêt démarrant en retard après lequel ces bascules qui doivent être remises à zéro avant un redémarrage sont remises à zéro sans remettre à zéro ledit moyen d'indicateur (22) et un programme de manipulation d'erreur est lancé, en utilisant les informations de vérification d'erreur mémorisées dans ledit moyen d'indicateur, ledit moyen d'indicateur étant remis à zéro par ledit programme de manipulation d'erreur.

2. Disposition de circuit selon la revendication 1, dans lequel dans un système de traitement de données modulaire, il est prévu pour chaque module (puce 1, 2, 3, ..) une bascule d'indicateur d'arrêt (30) qui est reliée à une ligne d'arrêt (25, 28, 44), la sortie (42) desdites bascules d'indicateur d'arrêt étant reliées à une zone d'interface de service de puce d'horloge (SIA) pour la lecture et la remise à zéro du moyen d'indicateur (22) et desdites bascules d'indicateur d'arrêt et pour procurer une adresse de démarrage du programme de manipulation d'erreur après ledit retard.
